# EUROPEAN PATENT SPECIFICATION

(11) **EP 2 492 184 B1**
(45) Date of publication and mention of the grant of the patent: **12.11.2014**
(21) Application number: 12157221.8
(22) Date of filing: 28.02.2012
(51) Int. Cl.: B63B 27/28, B63B 35/44, E02D 15/10, B63B 35/30

(54) **Device and method for depositing rocks at a defined location on the bottom of a water mass**
Vorrichtung und Verfahren zur Ablagerung von Felsen an einem bestimmten Ort auf dem Grund einer Wassermasse
Dispositif et procédé pour déposer des roches dans un emplacement défini sur le fond d'une masse d'eau

(30) Priority: 28.02.2011 NL 2006315
(43) Date of publication of application: 29.08.2012
(73) Proprietor: Tideway B.V., 4817 ZG Breda (NL)
(72) Inventor: Bouvy, Hugo, 4854 CC Bavel (NL)
(74) Representative: Brouwer, Hendrik Rogier

(56) References cited:
- WO-A1-2009/020385
- NL-A- 7 904 516
- US-A1- 2004 141 811
- US-B1- 6 524 030

## Description

The present invention relates to a device for depositing rocks at a defined location on the bottom of a water mass, comprising a vessel, a fall pipe which extends with a substantial vertical component and which is connected at its upper end to the vessel, and supply means for supplying rocks for depositing to the upper end of the fall pipe.

Such devices for depositing rocks on the bottom of a water mass are generally known.

In these prior art devices the angle at which the fall pipe extends is in general substantially vertically downward or defined only within certain limits relative to the vertical. The angle is determined by the manner in which the fall pipe is connected to the vessel, the movements of the water and the vessel and possible cables, a first end of which is connected underwater to the fall pipe and a second end of which is connected to a winch placed on the vessel. By operating the winches the position of the fall pipe, and thereby of the underside of the fall pipe, can be controlled within certain limits. The position of the underside of the fall pipe determines the location where the rocks are deposited.

In recent years more and more structures extending above the water surface, such as wind turbines, have been placed at sea. The base and the seabed in the vicinity of the base of such structures must be protected against erosion and swell. In order to arrange such protection use is usually made of large rocks deposited onto the seabed in the vicinity of the base of such structures. Use is made here of a device of the above stated type. During depositing of the rocks there is the danger of the underwater part of the structure being damaged. This is caused mainly in that the underside of the fall pipe is highly susceptible to movement, so that the position where the rocks come to rest cannot be precisely determined and the rocks leaving the fall pipe damage the structure. Nor is it inconceivable that the fall pipe itself damages the structure.

Closest prior art document WO 2009/020385 A1 discloses a method that avoids that assembly and disassembly of a fall pipe suspended from a vessel is limited or impaired by sea-state induced vessel motions, in particular roll and pitch of the vessel. Such vessel motions are likely to cause undesired stresses in the suspended fall pipe. The disclosed method comprises supporting the fall pipe in a tower that is freely pivotable with respect to the vessel, so that the orientation of the tower and the fall pipe suspended from said tower is essentially independent from sea-state induced vessel motions, in particular roll and pitch. This steering to a vertical position of the fall pipe can be caused by forces exerted on the tower by the suspended fall pipe, or by an active pivoting system provided on the vessel.

US 2004/141811 A1 discloses an apparatus for deployment of ballast material onto a subsea structure. The apparatus comprises a chute for conveying the ballast material. The chute is provided with at least one buoyancy element such that the chute may assume a generally vertical orientation in the water.

NL 7904516 A discloses a flexible fall hose through which stones and the like can be deposited on an underwater bottom. The flexible hose is suspended from a vessel.

The present invention has for its object to provide means with which the depositing of rocks can take place without any danger of damage to the structure.

This object is achieved with a device of the above stated type, wherein the fall pipe is connected at its upper end to the vessel by a gripper, and the gripper comprises a support construction for the fall pipe adjustable at an angle to the vertical direction by means of fall pipe angle adjusting means.

In a thus formed device for depositing rocks the position of the underside of the fall pipe can be precisely determined. This is because the fall pipe angle adjusting means provide the option of properly determining the angle of the support structure to the vertical direction, whereby the angle at which the fall pipe extends relative to the vertical direction is likewise properly determined. It hereby becomes possible to accurately control the whole position of the fall pipe, and thereby the position of the underside of the fall pipe. The chance of damage to the structure is greatly reduced as a result of this accuracy. It is noted that rocks are not only understood to mean pieces of natural stone, but also artificial rocks such as for instance concrete blocks.

The invention also relates to a method for depositing rocks from a vessel at a precisely defined location on the bottom of a water mass, wherein the rocks are supplied to a fall pipe extending with a substantial vertical component from the vessel, which fall pipe is connected at its upper end to the vessel by a gripper, comprising a support construction for the fall pipe that is adjustable at an angle to the vertical direction by means of fall pipe angle adjusting means, wherein the fall pipe is positioned at an angle to the vertical direction. In an embodiment of the method, the angular position of the fall pipe relative to the vessel is controlled for the purpose of maintaining the position of the underside of the fall pipe.

Depending on the depths at which the rocks must be deposited, the fall pipe can extend to great depth, and to so great a depth that it is structurally less attractive to make use of a fall pipe formed by a single part. In such situations it is attractive for the fall pipe to comprise at least two mutually connecting segments.

In order to ensure the accuracy of the position of the underside of the fall pipe, it is to be recommended that the segments of the fall pipe are connected rigidly to each other. It is however also possible to connect the subsequent fall pipe segment pivotally to the upper fall pipe segment, and to connect the successive segments making use of adjusting means which are adapted to adjust the angle between successive segments of the fall pipe.

In a preferred embodiment of the device according to the invention the support construction is provided with first gripping means for preventing a translation of the fall pipe at least at the position of the support construction, and with second gripping means for preventing a rotation of the fall pipe. Applying the combination of first and second gripping means makes it possible to as it were clamp the fall pipe at the position of the top side thereof, this providing the option of controlling the fall pipe, and more particularly the angle which the fall pipe makes with the vertical direction, without the use of other auxiliary means such as for instance winches.

Because winches and other guy wires are not necessary, a structure can be approached with much greater accuracy, and furthermore from an increased number of directions and angles. After all, winches form an obstacle having an adverse effect on the freedom of movement of the fall pipe. This also relates to lateral support or guy wires which can support the fall pipe laterally.

A further preferred embodiment of the device according to the invention comprises first gripping means comprising a form locking between support construction and fall pipe. A particularly suitable form locking comprises a pin-hole connection between the support construction and the fall pipe or a fall pipe segment. In a possible embodiment the peripheral surface of a fall pipe segment, or strengthening strips arranged thereon, is provided with a number of openings, which do not perforate the peripheral wall) and pins retractable and extendable in radial direction of the fall pipe are provided on the support construction. In a gripped state the pins engage in the openings, while the free state is defined by pins which have been retracted from the opening.

A further preferred embodiment of the device according to the invention is **characterized in that** the first gripping means comprise a gripping means translatable in the longitudinal direction of the fall pipe and a gripping means provided at a fixed position. The combination of a translatable (or dynamic) gripping means and a fixed (or static) gripping means also allows the device to be used to assemble a fall pipe from a number of fall pipe segments, as will be further elucidated in the figure description below.

In another aspect of the invention a device is provided in which the second gripping means comprise roller guides placed at a distance from each other in the longitudinal direction of the fall pipe. Such roller guides allow relatively great moments of force on the fall pipe to be absorbed at the position of the clamping without the fall pipe being subjected to high clamping forces. The first gripping means then provide for the fixation of the fall pipe segment in the longitudinal direction thereof.

A further preferred embodiment of the device according to the invention comprises roller guides in the form of a number of rollers disposed parallel to each other and engaging on the outer surface of the fall pipe.

For transport of the rocks to the top side of the fall pipe use is preferably made of a conveyor belt. This is after all a suitable transport means for transport of large objects of great weight in substantially horizontal direction. The upper part of the fall pipe or of the upper fall pipe segment therefore preferably takes a funnel-like form, wherein the conveyor belt drops the rocks into the funnel-like part.

A preferred embodiment of the device according to the invention comprises a lifting device for lifting the fall pipe or fall pipe segments, wherein the fall pipe segments are provided with engaging means for the lifting device. A suitable lifting device comprises for instance a crane which is also used as excavator and earth-moving machine and which can be applied without many modifications.

The application of a crane makes it further possible for the crane to comprise a carriage which can travel over the vessel and to which the upper part is connected for rotation about a vertical axis. In order to facilitate travel the vessel can be provided with rails and the carriage with drivable rail wheels. In order to prevent the crane toppling over in possibly heavy seas, enclosing means enclosing the wheels can be arranged above the rails.

Although other drive members, such as linear electric motors, are not precluded, it is recommended that at least one of the fall pipe angle adjusting means, the first and the second gripping means is provided with hydraulic cylinders. Such a drive can transmit much force and requires little maintenance.

Although it is in principle possible to manually operate the above discussed fall pipe angle adjusting means and the first and second gripping means, the accuracy of the position of the underside of the lowest fall pipe segment is greatly improved when the device comprises a control member adapted to control at least one of the fall pipe angle adjusting means, the first and the second gripping means. This is because such a control member can be programmed or operated for the purpose of maintaining the position of the underside of the fall pipe or the lowest fall pipe segment with great accuracy, automatically and without human intervention.

The control member is preferably adapted to maintain the underside of the lowest fall pipe or the lowest fall pipe segment at a predetermined position, since this does after all determine the accuracy with which the work is carried out, and the falling rocks and/or the fall pipe are prevented from damaging the structure.

This embodiment likewise provides a method of the above stated type, wherein the rocks are carried through a fall pipe connected to the vessel with the support construction, wherein the angle between the support construction (and the fall pipe) and the vessel is controlled for the purpose of maintaining the position of the underside of the fall pipe or the lowest fall pipe segment.

In order to avoid damage to the structure present under water it is also recommended that the control member is adapted to avoid positioning the arm or any of the fall pipes within a predetermined volume. This volume is then determined such that the structure present under water lies within this volume and the fall pipe is thus prevented from damaging this structure.

For proper functioning of the control member it is recommended that the control member is provided with an element for determining the position and orientation of the vessel, the control member is coupled to position sensors of the support structure and the control member is adapted to determine the position of the fall pipe from the position and orientation of the vessel and from signals supplied by the position sensors. If desired, the control can be further optimized in that the dynamic properties of the hydraulic cylinders and of the control member are optimized for the purpose of compensating the movements of the vessel resulting from swell.

The rocks preferably use to protect structures under the water surface have considerable dimensions, usually in the order of magnitude of 1 to 1.5 m. In order to guide such rocks through the fall pipe without the danger of their becoming jammed it is recommended that the fall pipe has a substantially round section with a diameter of between 2 m and 3 m, preferably between 2.3 m and 2.7 m.

To also enable proper functioning in the case of rocks with other dimensions, it is recommended that the fall pipe has a substantially round section and that the diameter of the fall pipe is at least one and a half times larger than the maximum diameter of the rocks for depositing.

As already stated above, the device according to the invention is usually used at great depth. This means that, despite the upward pressure of the water, the weight of the fall pipe is considerable, so that great forces are exerted on the support construction. In order to reduce these forces it is recommended that at least the underside of the fall pipe or the lowest fall pipe segment is provided with a floating body. In a further preferred embodiment the fall pipe is **characterized in that**, the further downward the fall pipe segments are situated (so the closer to the bottom side of the fall pipe), the smaller their wall thickness is. This further enhances the accuracy of the control of (the underside of) the fall pipe.

The device according to the invention, and in particular the gripper thereof, takes a modular form and can in principle be applied on any ship or other vessel such as for instance a pontoon or a ack-up platform. Owing to the relatively limited dimensions (particularly the height) of the gripper relative to the overall length of the fall pipe, the device can, if required, also be moved under a jack-up platform (for instance by being navigated thereunder), which jack-up platform is or has been applied for instance in the laying of the foundation, the feet of which have to be provided with rocks. This further increases the accessibility of the device to locations which are relatively difficult to reach.

The invention likewise relates to a method for assembling a fall pipe from fall pipe segments from a vessel. The method comprises of providing a vessel provided with a gripper which comprises a support construction for the fall pipe adjustable at an angle to the vertical direction by means of fall pipe angle adjusting means, lowering a first fall pipe segment into the support construction by means of a lifting device, lowering a second fall pipe segment against the first fall pipe segment by means of the lifting device, and mutually coupling the first and second fall pipe segments.

In a preferred embodiment of the method the above described steps are repeated until a fall pipe has been assembled with a number of segments lying between 3 and 12, and an overall length of at least 15 m. The gripper according to the invention can be used for a fall pipe comprising at least three fall pipe segments and preferably a maximum number of nine and a half fall pipe segments. This results in an overall fall pipe length of 17.4 m. It is indeed possible to apply partial fall pipe segments, such as half-segments.

The present invention will be further elucidated hereinbelow with reference to the accompanying figures. Herein:
figure 1 is a schematic side view of a device according to the invention;
figure 2 is a schematic perspective view of a device according to the invention;
figure 3A is a schematic perspective view of a gripper according to the invention; figure 3B is a schematic perspective view of the gripper according to the invention shown in figure 3A from the other side;
figure 4A is a schematic side view of a gripper according to the invention;
figure 4B is a schematic side view of the gripper according to the invention shown in figure 3 A;
figure 4C is a schematic bottom view of the gripper according to the invention shown in figure 3 A;
figure 4D is a schematic perspective view of second gripping means according to the invention;
figure 5 is a schematic perspective view of a fall pipe segment according to invention;
figure 6 is a schematic side view of the gripper with lifting device according to the invention; and
figures 7-11 show a schematic representation of a number of method steps for assembling a fall pipe from fall pipe segments making use of the gripper.

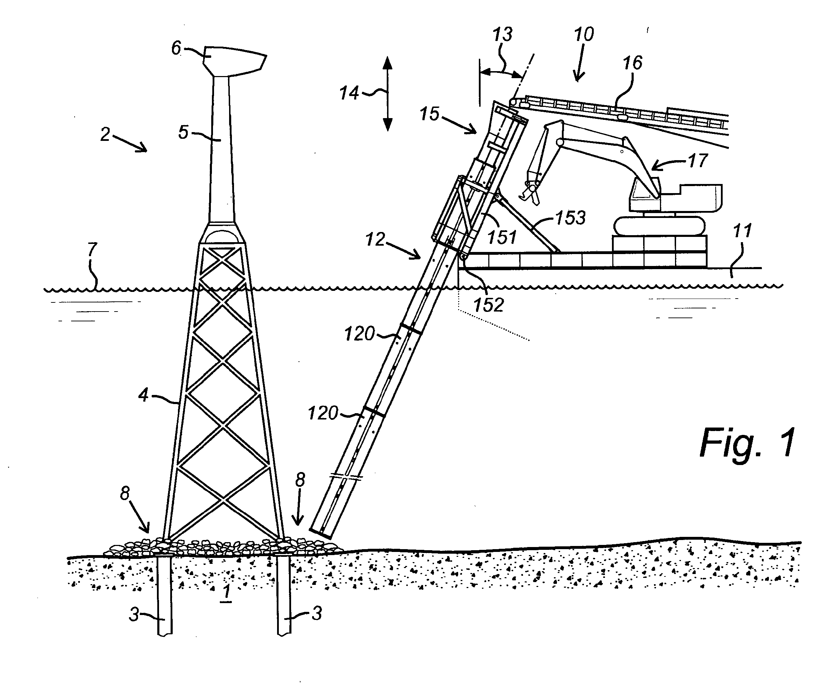

Shown with reference to figure 1 is a sea, with a seabed 1 on which a wind turbine designated as a whole with 2 has been placed. Wind turbine 2 comprises a foundation 3 on which a jacket 4 is arranged. Jacket 4 debouches above the water surface 7 into a monopile 5 on which a nacelle 6 is placed. Nacelle 6 is provided with a shaft on which the blades of the wind turbine must be mounted. In order to protect foundation 3 against erosion and being undermined, rocks 8 have to be deposited against foundation base 3 and in the immediate vicinity thereof.

For the purpose of depositing rocks 8 use is made of a device 10 floating on water surface 7 and comprising an only partially shown vessel 11. A fall pipe 12 extending with a substantial vertical component runs at an angle 13 to the vertical direction 14 from vessel 11. Fall pipe 12 is connected at its upper end to vessel 11 by a gripper 15 which will be discussed in more detail below. Gripper 15 comprises a support construction 151 for fall pipe 12 and is connected by means of a pivot connection 152 to vessel 11. Support construction 151 (and so also fall pipe 12) can be set at an angle 13 to the vertical direction 14 by means of fall pipe angle adjusting means in the form of for instance a hydraulic cylinder 153. Further present on vessel 11 are supply means in the form of a conveyor belt 16 for the purpose of supplying rocks 8 for depositing to the upper end of fall pipe 12. The device also comprises another lifting device for fall pipe segments in the form of a lifting device 17, the operation of which will be further elucidated below.

In the situation of use shown in figure 1 the fall pipe 12 comprises a number of fall pipe segments 120, wherein the lower part of each fall pipe segment is connected substantially rigidly to the upper part of a following (further downward) fall pipe segment. The rigid connection can be embodied in suitable manner by coupling end flanges of fall pipe segments 120 to each other by means of bolt connections. The coupled fall pipe segments 120 form a fall pipe 12, the lower segments of which extend below water surface 7 at an angle 13 to the vertical direction 14. It will be apparent that the invention is not limited to the above described mutual connection between fall pipe segments 120, but that any other method of connection is likewise possible. It may thus be useful in some cases to give the connection, or some connections, between fall pipe segments 120 a substantially watertight form. To enable adjustment of the angle 13 between fall pipe 12 and the vertical 14 use could be made of a linear drive member in the form of a hydraulic cylinder 153 which is connected rotatably to support construction 151 and to support construction 154. The angle of inclination of fall pipe 12 can be set by selecting the extent to which the hydraulic cylinder or fixed connection 153 is extended.

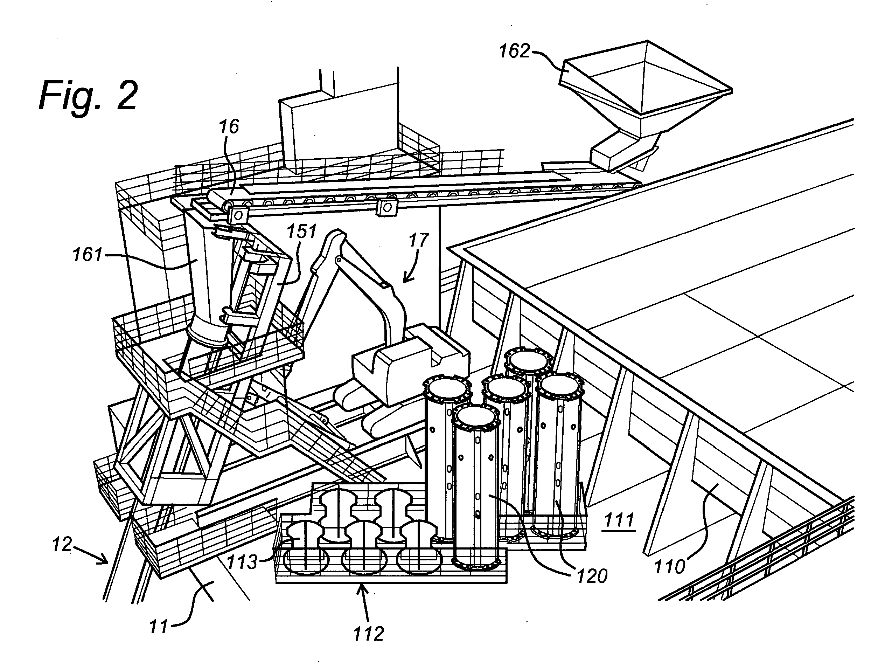

As shown in more detail in figure 2, for transport of the rocks from a bunker 110 present on vessel 11 use can be made of a crane, not shown in the drawings, which is placed on vessel 11 and which is provided with a gripping member and adapted to grip rocks 8 in the bunker and place rocks 8 on conveyor belt 16. On its discharge side the conveyor belt 16 is placed relative to support construction 151 such that rocks 8 are carried via an inlet funnel 161 to a position above fall pipe 12 and dropped therein. Placing of the rocks 8 on conveyor belt 16 on the feed side of conveyor belt 16 is facilitated by the presence of a funnel 162. Further placed on deck 111 of vessel 11 is a rack 112 provided with a number of protruding members 113 on which fall pipe segments 120 can be temporarily stored in substantially vertical direction, as is shown in figure 2 for a number of fall pipe segments 120.

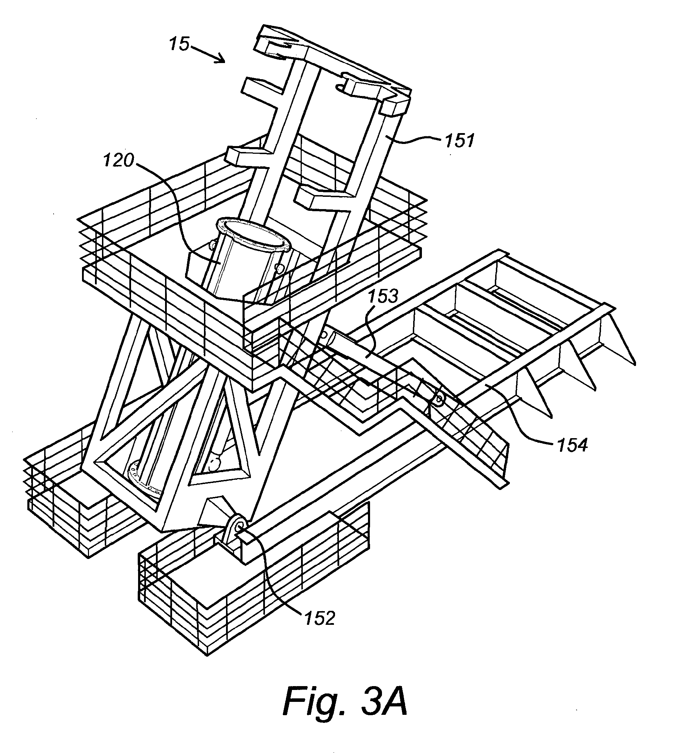

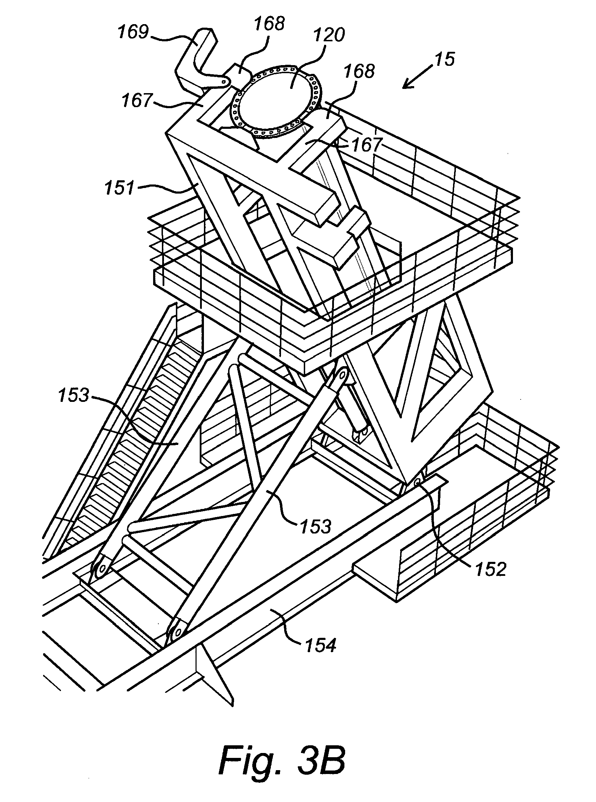

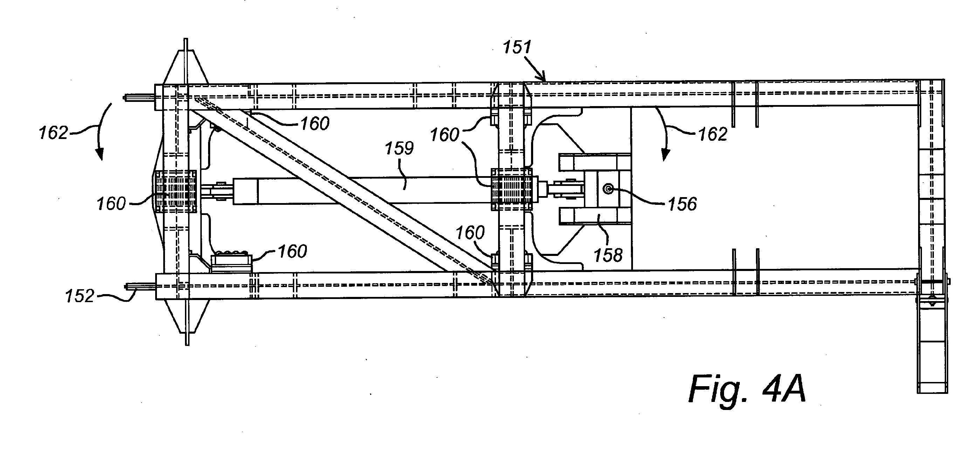

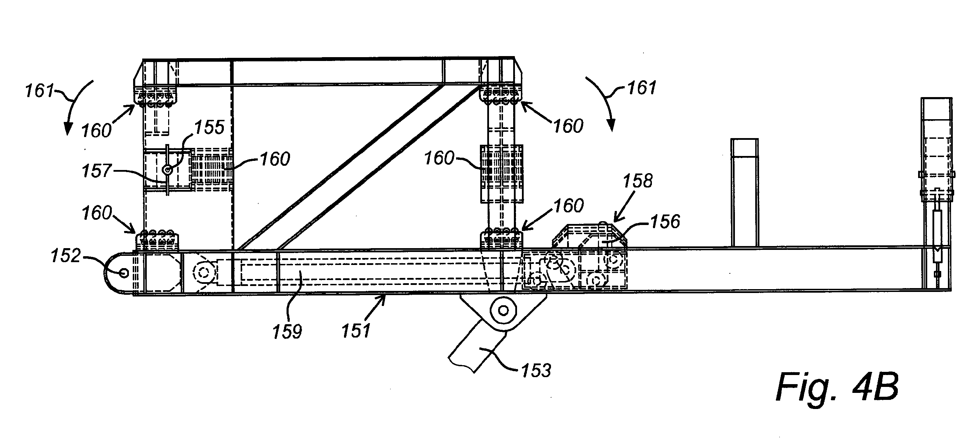

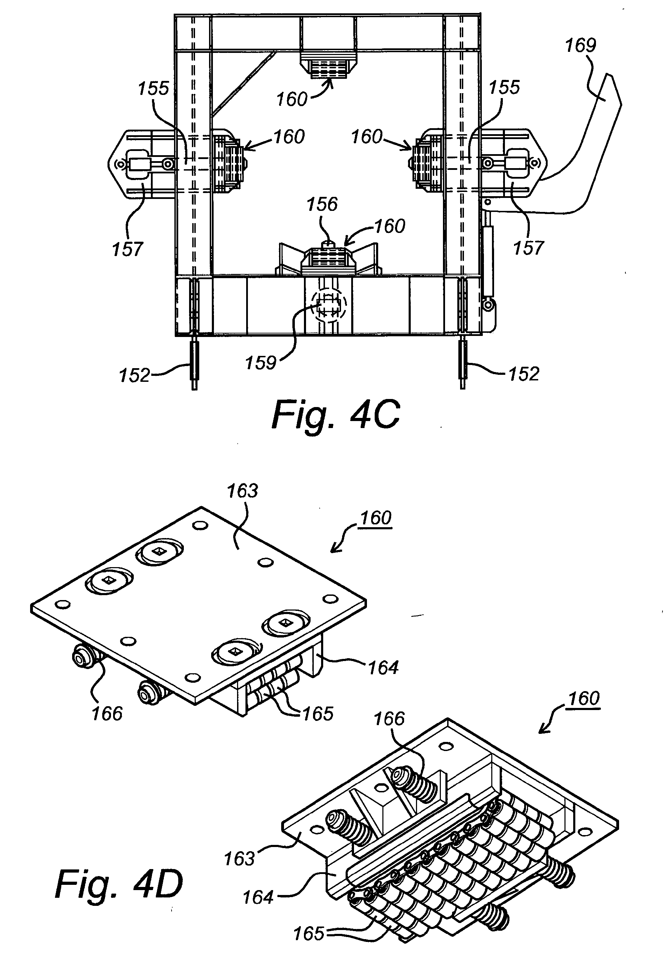

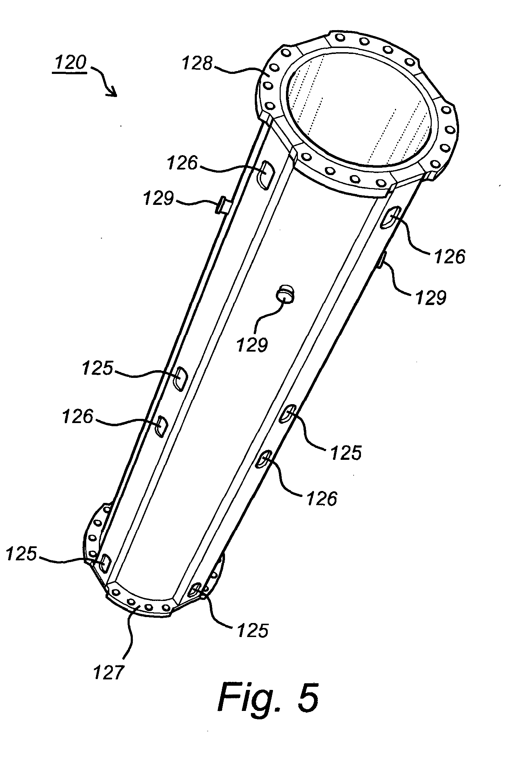

Referring to figures 3A, 3B, 4A, 4B and 4C, an embodiment of a gripper 15 according to the invention is shown in more detail. Gripper 15 comprises a support construction 151 for a fall pipe 12 or (as shown) a fall pipe segment 120. Support construction 151 is pivotally connected by means of hinged connections 152 to a connecting construction 154 which is riveted to the deck of vessel 11. Support construction 151 can be placed at an angle 13 to the vertical direction 14 by means of fall pipe angle adjusting means which, in the shown embodiment, are embodied as fixed connecting rods or as hydraulic cylinders 153. Support construction 151 is further provided with first gripping means for preventing a translation of fall pipe 12 or fall pipe segment 120 at least at the position of support construction 151. In the shown embodiment the first gripping means comprise a form-locking connection between support construction 151 and fall pipe 12 (or fall pipe segment 120) in the form of one or more hydraulic pin-hole connections (155, 125) comprising a hydraulic pin 155 which is connected by means of a transverse plate 157 to support construction 151 and which can engage in peripheral openings 125 arranged in fall pipe segment 120 (see figure 5). In the engaged situation, in which pin 155 extends into opening 125, substantially no translation of fall pipe 12 or the relevant fall pipe segment 120 is possible. For the purpose of assembling fall pipe 12 from different fall pipe segments 120 the gripper 15 is also provided with a hydraulic pin-hole connection (156, 126) translatable in the longitudinal direction of fall pipe 12. The hydraulic pin-hole connection (156, 126) comprises a guide construction 158 for a hydraulic pin 156 to be displaced in the longitudinal direction of fall pipe 12 by means of a hydraulic cylinder 159, which pin can engage in peripheral openings 126 arranged in fall pipe segment 120 (see figure 5). Support construction 151 is finally also provided on the top side thereof with a gripping construction for a fall pipe segment 120. The gripping construction comprises transverse arms 167 provided on their outer end with gripping plates 168, wherein a hydraulically controllable closing arm 169 is also present. A fall pipe segment 120 can be at least temporarily gripped using the gripping construction (167, 168, 169). Reference is made to the further description for a description of the co-action of the two pin-hole connections and the gripping construction in the assembly of a fall pipe 12.

Support construction 151 is further provided with second gripping means for preventing a rotation of fall pipe 12 or fall pipe segment 120 in the direction of the angle 13, therefore around an axis perpendicularly of the vertical direction 14. In the embodiment shown in the figures the second gripping means comprise roller guides 160 placed at a distance from each other in the longitudinal direction of fall pipe 12 or fall pipe segment 120. Roller guides 160 are adjustable in the radial direction of fall pipe 12 and engage on the outer surface of fall pipe 12 (or fall pipe segment 120). Because roller guides 160 are arranged at a (longitudinal) distance from each other, they can absorb relatively great moments (161, 162), whereby the above-mentioned rotation is substantially prevented.

Roller guides 160 are shown in more detail with reference to figure 4D. A roller guide 160 comprises a fixing plate 163 with which roller guide 160 can be fixed to support structure 151. Mounted on fixing plate 163 is a roller construction 164 comprising a number of rollers 165 which are arranged parallel to each other and which can rotate relatively unobstructed in a direction transversely of their longitudinal direction by means of a bearing (not shown). Adjusting screws 166 ensure in combination with springs that roller guide 160 can make a small lateral movement in order to avoid transverse forces on rollers 165. By mounting the roller guide 160 on support construction 151 such that rollers 165 run transversely of the longitudinal direction of a fall pipe 12 (or fall pipe segment 120) a translation of fall pipe 12 or a fall pipe segment 120 can take place substantially unobstructed (unless impeded by the first gripping means).

As shown in figure 5, fall pipe segments 120 comprise end flanges (127, 128) with which two successive fall pipe segments 120 can be mutually coupled in relatively rigid manner by bolting an upper flange 128 of a fall pipe segment 120 to the lower flange 127 of a following fall pipe segment 120. A fall pipe 12 thus assembled via coupling of a plurality of fall pipe segments 120 is held under water during use at an angle 13 by the combination of the above described first and second gripping means. The first and second gripping means ensure that fall pipe 12, and in particular the bottom outer end thereof, can be accurately positioned relative to a structure located under water. Very great moments of force are exerted here on fall pipe 12 at the position of gripper 15, which does after all act as a clamp for fall pipe 12. The specific construction of the first and second gripping means, wherein the means for preventing a translation of fall pipe 12 (the first gripping means) are separate from the means for preventing a rotation of fall pipe 12 (the second gripping means), ensures that fall pipe 12 does not collapse at the clamping position. In order to ensure that the positioning of the bottom outer end of fall pipe 12 by gripper 15 can take place still more precisely, the wall thickness of fall pipe 12 preferably decreases the closer the relevant fall pipe segment 120 is to the bottom outer end of fall pipe 12.

For control of the diverse hydraulic cylinders or other linear drive members use is made of a control member arranged in vessel 11 and adapted to hold the lower end of fall pipe 12 at a location. The vessel is after all subject to movements resulting from swell, wind and varying loads. Fall pipe 12 is also subject to these movements, which hinder accurate depositing of rocks 8. For this purpose the position of the lower end of fall pipe 12 is measured by means of a GPS, a remotely operated vehicle (ROV) or similar system. The linear drive elements can be controlled on the basis of these data. It is however also possible to measure the position and orientation of the vessel by means of such a system and to determine the position of the fall pipe by means of position sensors placed on the linear drive elements.

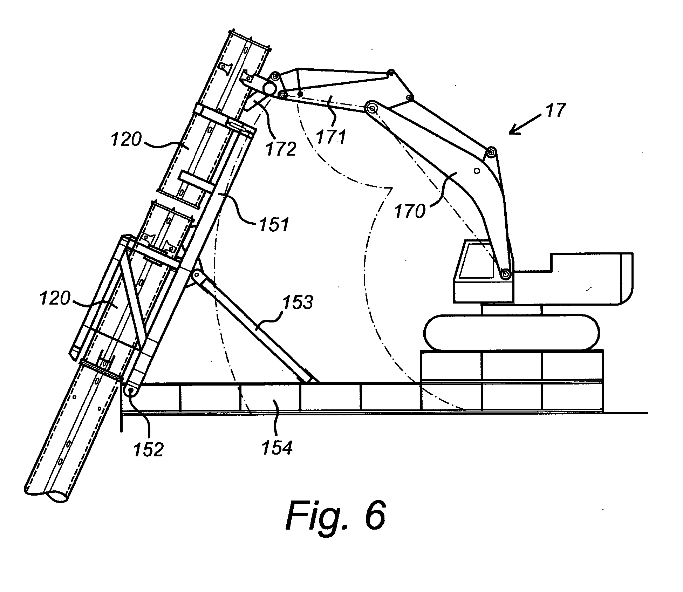

In addition to being used for accurate positioning of an assembled fall pipe at an angle under water, the device according to the invention is also highly suitable for assembling a fall pipe 12 from fall pipe segments. Such an assembly is elucidated briefly below with reference to figures 6-11.

For assembly purposes the device according to the invention comprises a lifting device in the form of crane 17. Cranes 17 is provided in known manner with a number of relatively rotatable force transmitting arms (170, 171) and provided at the outer end of arm 17 with a lifting means 172. Lifting means 172 can engage on fall pipe segment engaging means in the form of studs 129 provided on the peripheral surface of a fall pipe segment 120, so that a fall pipe segment 120 can be easily lifted.

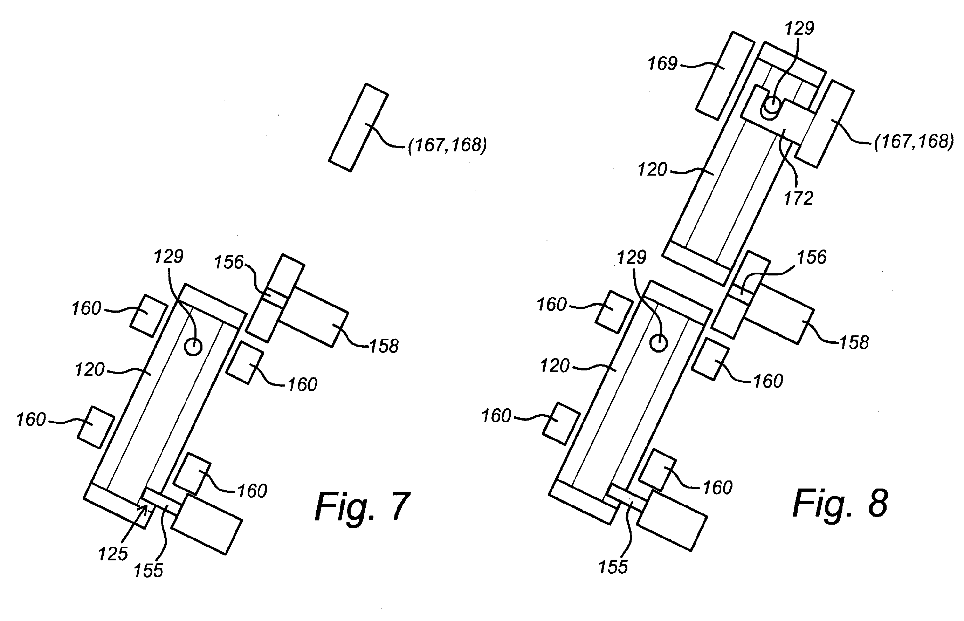

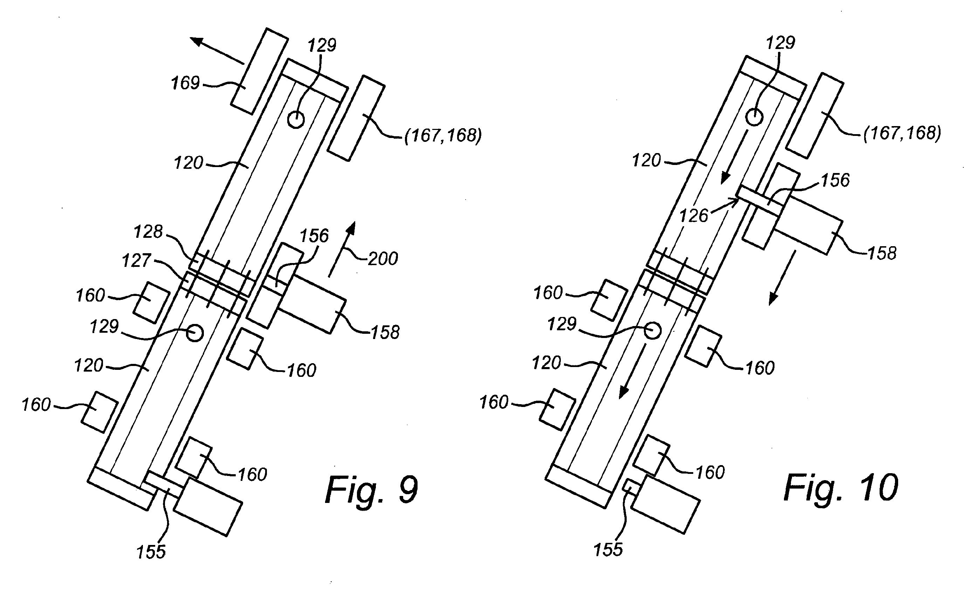

An assembly sequence is shown schematically in figures 7-13 and proceeds as follows. Referring to figure 7, a fall pipe segment 120 supported with the static pin-hole connections (155, 125) in support construction 151 is shown as point of departure. Using crane 17 a second fall pipe segment 120 is then placed on top of the first fall pipe segment 120 and the hydraulically controllable closing arm 169 of the upper gripping construction (167, 168, 169) is closed (figure 8). The lifting eye of lifting means 172 is opened and removed, whereby the upper fall pipe segment 120 moves downward against upper flange 128 of the lower fall pipe segment 120, after which the flanges are secured to each other using bolts (figure 9). Closing arm 169 is then opened again and the translatable or dynamic pin (156, 158) is moved upward as indicated with arrow 200. The assembly of two fall pipe segments 120 is then engaged by the dynamic pins (156, 158) and released by the static pins 155 as shown in figure 10, and the whole is moved downward by a translation of the dynamic pins (156, 158). Depending on the length of fall pipe segments 120, this translation can if desired take place in multiple steps, wherein the static and the dynamic pins (155, 156) alternately engage and release the openings (125, 126). In the engaged situation of the dynamic pins 156 and the free (retracted) situation of static pins 155 a translation is possible, while in the engaged situation of static pins 155 such a translation is not possible. The translation in the longitudinal direction of fall pipe segments 120 is made possible by roller guides 160.

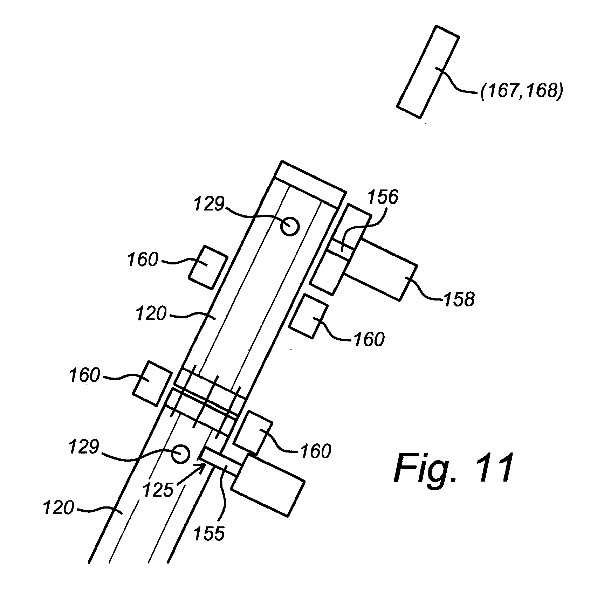

The situation shown in figure 11 is eventually reached wherein a lower fall pipe segment 120 is engaged by static pins 155 in an opening 125, while a fall pipe segment 120 resting thereon is supported only by roller guides 160 but left free by dynamic pins 156. From the position shown in figure 11 the above described sequence of operations is repeated until the desired number of fall pipe segments 120 has been arranged and the assembly of fall pipe 12 is completed.

## Claims

1. Device for depositing rocks at a defined location on the bottom of a water mass, comprising a vessel (11); a fall pipe (12) which extends with a substantial vertical component and which is connected at its upper end to the vessel by a gripper (15); and supply means for supplying rocks for depositing to the upper end of the fall pipe, wherein the gripper comprises a support construction (151,154) for the fall pipe adjustable at an angle to the vertical direction by means of fall pipe angle adjusting means (153).

2. Device as claimed in claim 1, wherein the support construction is provided with first gripping means for preventing a translation of the fall pipe at least at the position of the support construction, and with second gripping means for preventing a rotation of the fall pipe.

3. Device as claimed in claim 2, wherein the first gripping means comprise a form locking between support construction and fall pipe.

4. Device as claimed in claim 3, wherein the form locking comprises a pin-hole connection.

5. Device as claimed in any of the claims 2-4, wherein the first gripping means comprise a gripping means translatable in the longitudinal direction of the fall pipe and a gripping means provided at a fixed position.

6. Device as claimed in any of the claims 2-5, wherein the second gripping means comprise rollers placed at a distance from each other in the longitudinal direction of the fall pipe.

7. Device as claimed in claim 6, wherein the rollers engage on the outer surface of the fall pipe.

8. Device as claimed in any of the foregoing claims, wherein the fall pipe comprises a number of substantially rigidly coupled segments.

9. Device as claimed in any of the foregoing claims, wherein the fall pipe comprises a fall pipe segment.

10. Device as claimed in any of the foregoing claims, comprising a lifting device for lifting the fall pipe or fall pipe segments, wherein the fall pipe segments are provided with engaging means for the lifting device.

11. Device as claimed in any of the foregoing claims, wherein the supply means comprise a conveyor belt leading to the top side of the fall pipe.

12. Device as claimed in any of the foregoing claims, wherein the device comprises a control member adapted to control at least one of the first and second gripping means, the fall pipe angle adjusting means and the rotation means of the gripper.

13. Device as claimed in claim 12, **characterized in that** the control member is adapted to maintain the underside of the fall pipe at a predetermined position.

14. Method for assembling a fall pipe (12) from fall pipe segments from a vessel, comprising of providing a vessel (11) provided with a gripper (15) which comprises a support construction (151,154) for the fall pipe adjustable at an angle to the vertical direction by means of fall pipe angle adjusting means (153), lowering a first fall pipe segment into the support construction by means of a lifting device, lowering a second fall pipe segment against the first fall pipe segment by means of the lifting device, and mutually coupling the first and second fall pipe segments.

15. Method as claimed in claim 14, comprising of coupling the first fall pipe segment to first gripping means of the support construction by means of the lifting device, lowering the first fall pipe segment, coupling the second fall pipe segment to the first gripping means of the support construction by means of the lifting device, lowering the second fall pipe segment against the first fall pipe segment with the first gripping means, and mutually coupling the first and second fall pipe segments.

16. Method as claimed in claim 15, wherein the steps are repeated until a fall pipe has been assembled with a number of segments lying between 3 and 12, and an overall length of at least 15 m.

17. Method for depositing rocks from a vessel (11) at a precisely defined location on the bottom of a water mass, wherein the rocks are supplied to a fall pipe (12) extending with a substantial vertical component from the vessel, which fall pipe is connected at its upper end to the vessel by a gripper (15) comprising a support construction (151,154) for the fall pipe that is adjustable at an angle to the vertical direction by means of fall pipe angle adjusting means (153), wherein the fall pipe is positioned at an angle to the vertical direction.

18. Method as claimed in claim 17, wherein the angular position of the fall pipe relative to the vessel is controlled for the purpose of maintaining the position of the underside of the fall pipe.

## Patentansprüche

1. Einrichtung zum Absetzen von Felsbrocken an einem definierten Ort am Boden einer Wassermasse, bestehend aus einem Schiff (11), einem Fallrohr (12), das sich mit einer im Wesentlichen vertikalen Komponente erstreckt und das an seinem oberen Ende mit dem Schiff durch einen Greifer (15) verbunden ist, und einem Bereitstellungsmittel zur Bereitstellung von Felsbrocken zum Absetzen am oberen Ende des Fallrohrs, wobei der Greifer eine Haltekonstruktion (151, 154) für das Fallrohr umfasst, die durch ein Mittel zur Fallrohrwinkeleinstellung (153) in einem Winkel zur Vertikalen verstellbar ist.

2. Einrichtung nach Anspruch 1, wobei die Haltekonstruktion mit einem ersten Greifermittel zur Vermeidung einer Verschiebung des Fallrohrs mindestens an der Position der Haltekonstruktion und einem zweiten Greifermittel zur Vermeidung einer Drehung des Fallrohrs ausgestattet ist.

3. Einrichtung nach Anspruch 2, wobei das erste Greifermittel zwischen Haltekonstruktion und Fallrohr einen Formschluss aufweist.

4. Einrichtung nach Anspruch 3, wobei der Formschluss eine Nadellochverbindung aufweist.

5. Einrichtung nach einem der Ansprüche 2-4, wobei das erste Greifermittel ein in Längsrichtung des Fallrohrs verschiebbares Greifermittel und ein an einer festen Position bereitgestelltes Greifermittel umfasst.

6. Einrichtung nach einem der Ansprüche 2-5, wobei das zweite Greifermittel in Längsrichtung des Fallrohrs in einem Abstand zueinander liegende Rollen aufweist.

7. Einrichtung nach Anspruch 6, wobei die Rollen auf der Außenfläche des Fallrohrs anliegen.

8. Einrichtung nach einem der vorherigen Ansprüche, wobei das Fallrohr mehrere im Wesentlichen fest verkoppelte Segmente umfasst.

9. Einrichtung nach einem der vorherigen Ansprüche, wobei das Fallrohr ein Fallrohrsegment umfasst.

10. Einrichtung nach einem der vorherigen Ansprüche, die eine Hubeinrichtung zum Heben des Fallrohrs oder der Fallrohrsegmente umfasst, wobei die Fallrohrsegmente mit Koppelelementen für die Hubeinrichtung versehen sind.

11. Einrichtung nach einem der vorherigen Ansprüche, wobei das Bereitstellungsmittel ein Förderband umfasst, das zur Oberseite des Fallrohrs führt.

12. Einrichtung nach einem der vorherigen Ansprüche, wobei die Einrichtung ein Steuerungsglied umfasst, das so angepasst ist, dass mindestens eines des ersten und zweiten Greifermittels, des Fallrohrwinkeleinstellungsmittels und des Drehmittels des Greifers gesteuert werden kann.

13. Einrichtung nach Anspruch 12, **dadurch gekennzeichnet, dass** das Steuerungsglied so angepasst ist, dass die Unterseite des Fallrohrs an einer vorbestimmten Position gehalten wird.

14. Verfahren für den Zusammenbau eines Fallrohrs aus Fallrohrsegmenten von einem Schiff aus, bestehend aus dem Bereitstellen eines Schiffs (11), das mit einem Greifer (15) ausgestattet ist, der mit einer Haltekonstruktion (151, 154) für das Fallrohr, die mit einem Fallrohrwinkeleinstellungsmittel (153) in einem Winkel zur Vertikalen verstellbar ist, versehen ist, dem Absenken eines ersten Fallrohrsegments mit einer Hubeinrichtung in die Haltekonstruktion, dem Absenken eines zweiten Fallrohrsegments mit einer Hubeinrichtung auf das erste Fallrohrsegment und dem Aneinanderkoppeln des ersten und zweiten Fallrohrsegments.

15. Verfahren nach Anspruch 14, bestehend aus dem Ankoppeln des ersten Fallrohrsegments an das erste Greifermittel der Haltekonstruktion mit Hilfe der Hubeinrichtung, dem Absenken des ersten Fallrohrsegments, dem Ankoppeln des zweiten Fallrohrsegments an das erste Greifermittel der Haltekonstruktion mit Hilfe der Hubeinrichtung, dem Absenken des zweiten Fallrohrsegments auf das erste Fallrohrsegment mit dem ersten Greifermittel und dem Aneinanderkoppeln des ersten und zweiten Fallrohrsegments.

16. Verfahren nach Anspruch 15, wobei die Schritte wiederholt werden, bis mit einer Anzahl von Segmenten, die zwischen 3 und 12 liegt, ein Fallrohr mit einer Gesamtlänge von mindestens 15 Metern zusammengefügt wurde.

17. Verfahren zum Absetzen von Felsbrocken von einem Schiff (11) an einem genau definierten Ort auf dem Boden einer Wassermasse, wobei die Felsbrocken in ein Fallrohr (12) geleitet werden, das sich vom Schiff aus mit einer im Wesentlichen vertikalen Komponente erstreckt, wobei das Fallrohr an seinem oberen Ende durch einen Greifer (15) mit dem Schiff verbunden ist, der eine Haltekonstruktion (151, 154) für das Fallrohr umfasst, die durch ein Mittel zur Fallrohrwinkeleinstellung (153) in einem Winkel zur Vertikalen verstellbar ist, wodurch das Fallrohr in einem Winkel zur Vertikalen positioniert wird.

18. Verfahren nach Anspruch 17, wobei die Winkelposition des Fallrohrs in Bezug auf das Schiff so gesteuert wird, dass die Position der Fallrohrunterseite stabil bleibt.

## Revendications

1. Dispositif permettant de déposer des roches en un endroit déterminé sur le fond d'une masse d'eau, comprenant un navire (11), un tuyau de descente (12) qui s'étend suivant une composante sensiblement verticale et qui est relié au navire à son extrémité supérieure par un dispositif de serrage (15), et des moyens d'alimentation pour amener les roches à déposer jusqu'à l'extrémité supérieure du tuyau de descente, étant entendu que le dispositif de serrage comprend une structure de support (151, 154) du tuyau de descente réglable sous un angle par rapport à la verticale au moyen de moyens (153) de réglage d'angle de tuyau de descente.

2. Dispositif selon la revendication 1, dans lequel la structure de support est dotée de premiers moyens de serrage pour empêcher un mouvement du tuyau de descente au moins au niveau de la structure de support, et de seconds moyens de serrage pour empêcher une rotation du tuyau de descente.

3. Dispositif selon la revendication 2, dans lequel les premiers moyens de serrage comprennent une liaison par complémentarité de forme entre la structure de support et le tuyau de descente.

4. Dispositif selon la revendication 3, dans lequel la liaison par complémentarité de forme consiste en un assemblage par goujon-trou.

5. Dispositif selon l'une quelconque des revendications 2-4, dans lequel les premiers moyens de serrage comprennent un moyen de serrage déplaçable dans le sens longitudinal du tuyau de descente et un moyen de serrage prévu en une position fixe.

6. Dispositif selon l'une quelconque des revendications 2-5, dans lequel les seconds moyens de serrage comprennent des galets placés à une certaine distance l'un de l'autre dans le sens longitudinal du tuyau de descente.

7. Dispositif selon la revendication 6, dans lequel les galets prennent appui sur la surface externe du tuyau de descente.

8. Dispositif selon l'une quelconque des revendications précédentes, dans lequel le tuyau de descente comprend une série de segments couplés de façon sensiblement rigide.

9. Dispositif selon l'une quelconque des revendications précédentes, dans lequel le tuyau de descente comprend un segment de tuyau de descente.

10. Dispositif selon l'une quelconque des revendications précédentes, comprenant un dispositif de levage pour lever le tuyau de descente ou des segments de tuyau de descente, étant entendu que les segments de tuyau de descente sont dotés de moyens d'accrochage pour le dispositif de levage.

11. Dispositif selon l'une quelconque des revendications précédentes, dans lequel les moyens d'alimentation comprennent une courroie transporteuse menant jusqu'au sommet du tuyau de descente.

12. Dispositif selon l'une quelconque des revendications précédentes, dans lequel le dispositif comprend un organe de commande adapté pour commander au moins les premiers et seconds moyens de serrage, le moyen de réglage d'angle de tuyau de descente ou le moyen de rotation du dispositif de serrage.

13. Dispositif selon la revendication 12, **caractérisé en ce que** l'organe de commande est adapté pour maintenir le bas du tuyau de descente en une position prédéterminée.

14. Procédé d'assemblage d'un tuyau de descente (12) à partir de segments de tuyau de descente, depuis un navire, consistant à prévoir un navire (11) doté d'un dispositif de serrage (15) qui comprend une structure de support (151, 154) du tuyau de descente réglable sous un angle par rapport à la verticale au moyen de moyens (153) de réglage d'angle de tuyau de descente, à abaisser un premier segment de tuyau de descente dans la structure de support au moyen d'un dispositif de levage, à abaisser un second segment de tuyau de descente contre le premier segment de tuyau de descente au moyen du dispositif de levage et à relier entre eux le premier segment de tuyau de descente et le second.

15. Procédé selon la revendication 14, consistant à relier le premier segment de tuyau de descente aux premiers moyens de serrage de la structure de support au moyen du dispositif de levage, à abaisser le premier segment de tuyau de descente, à relier le second segment de tuyau de descente aux premiers moyens de serrage de la structure de support au moyen du dispositif de levage, à abaisser le second segment de tuyau de descente contre le premier segment de tuyau de descente avec les premiers moyens de serrage et à relier entre eux le premier segment de tuyau de descente et le second.

16. Procédé selon la revendication 15, dans lequel les étapes sont répétées jusqu'à ce que l'on ait assemblé un tuyau de descente comportant un nombre de segments situé entre 3 et 12 et ayant une longueur totale d'au moins 15 m.

17. Procédé de dépôt de roches depuis un navire (11) en un endroit défini avec précision sur le fond d'une masse d'eau, les roches étant amenées jusqu'à un tuyau de descente (12) s'étendant suivant une composante sensiblement verticale depuis le navire, lequel tuyau de descente est relié au navire à son extrémité supérieure par un dispositif de serrage (15) comprenant une structure de support (151, 154) du tuyau de descente qui est réglable sous un angle par rapport à la verticale au moyen de moyens (153) de réglage d'angle de tuyau de descente, le tuyau de descente étant positionné sous un angle par rapport à la verticale.

18. Procédé selon la revendication 17, dans lequel la position angulaire du tuyau de descente par rapport au navire est régulée dans le but de maintenir la position du bas du tuyau de descente.
